# EUROPEAN PATENT APPLICATION

(11) **EP 2 455 258 A1**
(43) Date of publication of application: **23.05.2012**
(21) Application number: 11189151.1
(22) Date of filing: 15.11.2011
(51) Int. Cl.: B60Q 3/00, G02B 6/00

(54) **Light guide member**

(30) Priority: 18.11.2010 JP 2010257479
(71) Applicant: Koito Manufacturing Co., Ltd., Tokyo 108-8711 (JP)
(72) Inventor: Ishigami, Atsushi, Shizuoka-shi, Shizuoka (JP)
(74) Representative: Intès, Didier Gérard André

(57) **Abstract**

A light guide member (10) has a main body (20) formed of material having translucency. The main body (20) extends from a first end to a second end in an extending direction. The first end is configured to have light from a light source enter. A vertical cross-section of the main body (20) in a plane (P-P) perpendicular to the extending direction is formed in a shape of a fan.

## Description

### BACKGROUND

### TECHNICAL FIELD

The present disclosure relates to a light guide member, and particularly to a light guide member which light of a light source enters from at least one end portion thereof.

### RELATED ART

Recently, as a light source having a high directivity such as a LED is being developed, application of a light guide member which transmits internally incident light from such the light source and emits its light from an end portion or a side surface thereof is also increasing. Here, there has been known a light guide rod which is used for illumination by emitting incident light from one end from a side surface (refer to, for example, Patent Document 1).

### [Patent Document]

[Patent Document 1] JP-A-2001-281457

### SUMMARY

In the case that a light guide member is utilized as, for example, a light source for decoration, it is important to enhance a decorative effect of the light guide member in a state where a light source is turned on, and further an external appearance of the light guide member in a state where incidence of the light from the light source is released, such as a state where the light source is turned off, is also important to the design. However, in the above Patent Document, consideration is not given to the external appearance of the light guide rod when the light source is turned off.
One or more embodiments of the present invention provide a light guide member which can enhance a decorative effect of the light guide member also in a state where light incidence is released.

A light guide member according to one or more embodiments of the invention is formed of material having translucency so as to extend from one end, where light from a light source is to enter, to the other end, wherein a vertical section to the extending direction is formed in the shape of a fan.

According to this aspect, the incident light from a curved surface which becomes a curved portion of the fan-shaped section can be reflected by two surfaces which become two straight-line portions of the fan-shaped section and then can be emitted again from the curved surface. Therefore, also in a state where the light incidence from the light source is released, it is possible to make the light guide member appear to be plated when the light guide member is viewed from the curved surface, so that a decorative effect of the light guide member can be enhanced.

According to one or more embodiments of the present invention, two straight-line portions in the fan-shaped section may cross each other at substantially right angles.

According to this aspect, the two surfaces corresponding to the two straight-line portions reflect the incident light from the curved surface of the light guide member, thereby to enable substantially total reflection in the opposite direction to the incident direction toward the curved surface. Therefore, it is possible to make the light guide member appear to be plated more distinctively when the light guide member is viewed from the curved surface, so that external appearance of the light guide member can be enhanced more.

According to one or more embodiments of the present invention, plural recess portions may be provided scatteringly in at least one of two surfaces which become the two straight-line portions of the fan-shaped section.

In the case that the recess portions are provided in at least one of these two surfaces, the light guide member, viewed from the curved surface side, looks conversely, as if convex portions were provided. From a result of inventor's research and development, it has become clear that, by thus making the plural recess portions scatter in at least one of the two surfaces which become the two straight-line portions of the fan-shaped section, when light enters the light guide member from at least one end portion, reflection images of the plural recess portions appear in three-dimensional relief in the light guide member. Therefore, according to this aspect, the decorative effect of the light guide member when the light enters can be enhanced.

According to one or more embodiments of the present invention, the plural recess portions may be provided in both of the two surfaces so as to be located asymmetrically around a line of intersection between the two surfaces.

In the case that the plural recess portions are provided so as to be located symmetrically about the line of intersection between the two surfaces, there is fear that the recess portions located symmetrically may mutually disturb reflection of their images toward the curved surface. According to this aspect, it is possible to prevent the recess portions from thus mutually disturbing the reflection of their images, so that it is possible to make the plural recess portions when viewed from the curved surface side appear properly in relief and look like the plural convex portions.

According to one or more embodiments of the invention, it is possible to enhance a decorative effect of a light guide member also in a state where light incidence is released.

### BRIEF DESCRIPTION OF THE DRAWINGS

Fig. 1 is a diagram showing a vehicle door on which an illumination unit according to one or more embodiments of the present invention is mounted.
Fig. 2 is a front view of the illumination unit.
Fig. 3 is a sectional view of the illumination unit taken along a line of P-P in Fig. 2.
Fig. 4 is a diagram of a light guide member, viewed from a point Q in Fig. 3.
Fig. 5 is a picture of the light guide member taken from a front side when the LED light source is in the off-state.
Fig. 6 is a picture of the light guide member taken from the front side when the LED light source is in the On-state.

### DETAILED DESCRIPTION

Referring to drawings, embodiments of the invention will be described below in detail. In embodiments of the invention, numerous specific details are set forth in order to provide a more thorough understanding of the invention. However, it will be apparent to one of ordinary skill in the art that the invention may be practiced without these specific details. In other instances, well-known features have not been described in detail to avoid obscuring the invention.

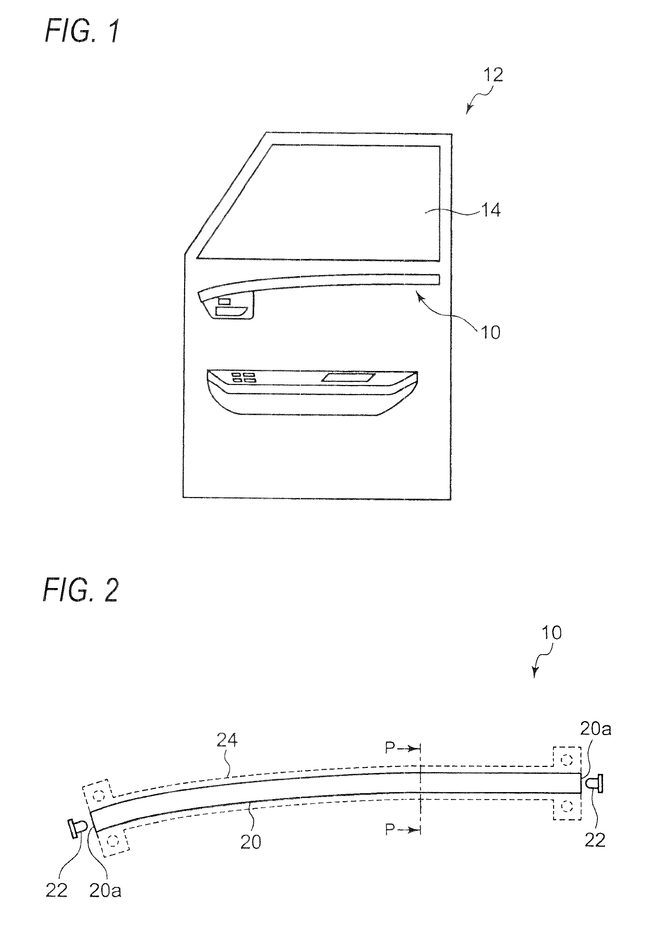

Fig. 1 is a diagram showing a vehicle door 12 on which an illumination unit 10 according to one or more embodiments of the present invention is mounted. The door 12 is opened and closed when a vehicle occupant gets into or out of a vehicle. Fig. 1 shows the inside of the door 12 seen from the room inside of the vehicle.

The illumination unit 10 functions as a decorative lamp in the vehicle room. The illumination unit 10 is provided below a window 14 so as to extend in a substantially horizontal direction. Further, the application of the illumination unit 10 is not limited to the decorative lamp of the vehicle door. The illumination unit 10 may be provided in a lamp room of, for example, a headlamp or a rear combination lamp, or may be provided for others than the vehicle.

Fig. 2 is a front view of the illumination unit 10. The illumination unit 10 includes a light guide member 20, a LED (Light Emitting Diode) light source 22, and an attachment bracket 24. The light guide member 20 is formed of material having translucency and being elongated. Specifically, the light guide member 20 is formed of resin material which is colorless and transparent. The light guide member 20 may be formed of material which is colored and transparent, and also may be formed of glass.

The light guide member 20 is formed so as to curve slightly in response to the interior design of the door 12. Further, the light guide member 20 may be provided so as to extend linearly or in the shape of a ring, and also may be formed in other curved shapes.

Two LED light sources 22 are provided, each of which is arranged so as to be opposed to each of both end faces 20a of the light guide member 20. Because the illumination unit 10 is used for decoration, each of the LED light sources 22 to be used emits the colored light such as blue light. Further, a LED light source 22 which emits white light may be used. Because the LED light source 22 is known, description of the constitution thereof will be omitted. Further, light sources other than the LED light source 22, such as an incandescent lamp and a discharge lamp may be used. The attachment bracket 24, in order to fix the light guide member 20 to the door 12, is attached onto a rear surface of the light guide member 20.

The number of the LED light sources 22 to be provided may be one. In this case, the LED light source 22 is arranged so as to be opposed to one of the two end faces 20a, and the light guide member 20 is formed so as to extend from one end portion where the light from the LED light source 22 is to enter to the other end.

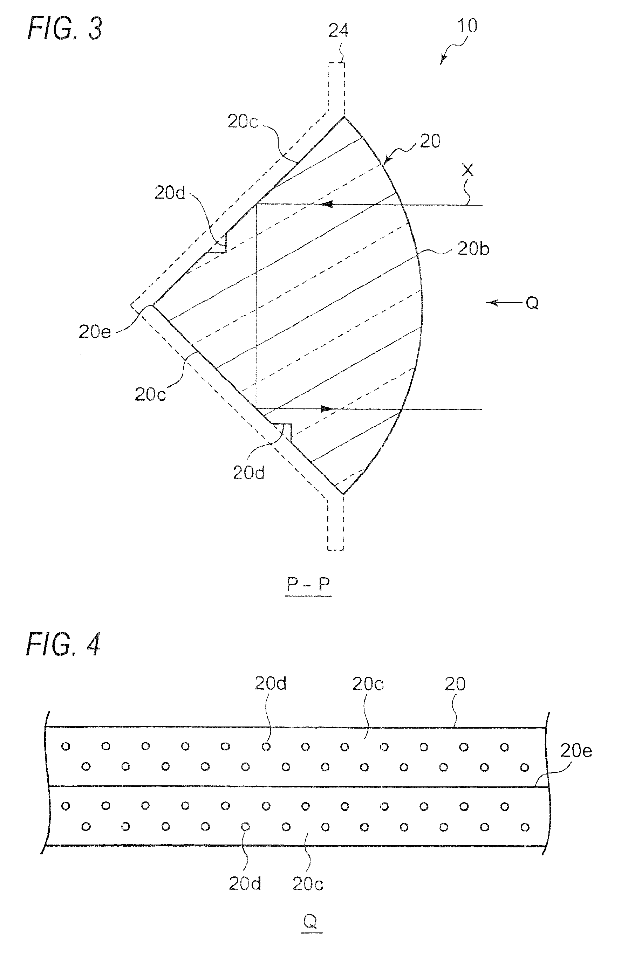

Fig. 3 is a sectional view of the illumination unit 10 taken along a line of P-P in Fig. 2. As shown in Fig. 3, the light guide member 20 is formed so that a vertical section to its extending direction is fan-shaped (hand-held fan). Accordingly, the light guide member 20 includes a surface 20b of a curved surface which becomes a curvilinear portion of the fan-shaped section, and two rear surfaces 20c which become two straight-line portions of the fan-shaped section. By thus forming the light guide member 20 so as to have the fan-shaped section, the incident light from the surface 20b can be reflected by the two rear surfaces 20c and can be emitted from the surface 20b again. Therefore, also in the case that the light guide member 20 has been turned off, because the light guide member 20 appears to be plated when seen from the front side, that is, from the surface 20b side, a decorative effect of the light guide member 20 can be enhanced.

Further, in one or more embodiments of the present invention, the light guide member 20 is formed so that the two straight-line portions in the fan-shaped section cross each other at substantially right angles. Namely, the two rear surfaces 20c are formed so as to cross each other at a line of intersection 20e at substantially right angles. Hereby, by reflecting the incident light from the surface 20b of the light guide member 20 by these two rear surfaces 20c as shown by an arrow X in Fig. 3, substantially total reflection in the opposite direction to the incident direction is permitted. By providing the light guide member 20 so that such the total reflection of the incident light occurs in the opposite direction to the incident direction, the light guide member 20 appears clearly to be plated when seen from the surface 20b, so that the decorative effect of the light guide member 20 can be enhanced more. Further, the angle between the two rear surfaces 20c is not limited to 90 degrees. The angle between the two rear surfaces 20c may be a predetermined angle smaller or larger than 90 degrees.

Each of the two rear surfaces 20c is not subjected to mirror-like finishing such as aluminum or silver deposition. This is because, even in the case that such the mirror finishing is carried out, it is possible, by forming the section of the light guide member 20 in the fan shape as described above, to permit the total reflection of the incident light from the surface 20b by the two rear surfaces 20c.

The attachment bracket 24 is formed, in order to come into contact with the two rear surfaces 20c of the light guide member 20, so that its section vertical to the extending direction is V-shaped. The attachment bracket 24 is formed of a resin. Further, the attachment bracket 24 may be formed of other material than the resin, such as metal.

Fig. 4 is a diagram of the light guide member 20, viewed from a point Q in Fig. 3. In each of the two rear surfaces 20c, plural punctures 20d which are recess portions are provided so as to be scattered. In one or more embodiments of the present invention, each of the plural punctures 20d is formed so as to be recessed conically. Further, the shape of the puncture 20d is not limited to this shape.

In the case that the punctures 20d which are the recess portions are provided in these two rear surfaces 20c, the light guide member 20 looks, when seen from the surface 20b side, as if convex portions were conversely provided in the rear surfaces 20c. By thus providing the punctures 20d in the rear surfaces 20c, the light from the LED light source 22 is reflected by these punctures 20, and it is possible to make the punctures 20d look like convex portions which are emitting light. Therefore, a high decorative effect can be obtained.

In a result of research and development by this inventor, it has been confirmed that, by making the punctures 20d thus scattered in each of the two rear surfaces 20c which become the two straight-line portions of the fan-shaped section, when the LED light source 22 is turned on and light enters the light guide member 20, each of the plural punctures 20d reflects its incident light, and appears in three-dimensional relief in the light guide member 20 as if the plural convex portions emitted the light. Therefore, by providing such the plural punctures 20d, the decorative effect of the light guide member 20 when the light enters from the end face 20a can be enhanced.

The plural punctures 20d are provided in both of the two rear surfaces 20c so as to be located asymmetrically about the line of intersection 20e. In the case that plural punctures 20d are provided so as to be located symmetrically about the line of intersection 20e between the two rear surfaces 20c, there is fear that the punctures 20d located symmetrically may mutually disturb reflection of their reflection images. By thus arranging the plural punctures 20d so as to be located asymmetrically about the line of intersection 20e, it is possible to prevent the punctures 20d from mutually disturbing the reflection of their images, so that it is possible to make the reflection images of the plural punctures 20d appear in relief. Further, the plural punctures 20d may be provided on either of the two rear surfaces 20c so as to be scattered.

In one or more embodiments of the present invention, the plural punctures 20d are arranged so as to line up regularly in positions of intersection points of a square lattice when the images inverted around the intersection line 20e are superimposed. Further, the arrangement of the plural punctures 20d is not limited to the above arrangement but the plural punctures 20d may be arranged irregularly.

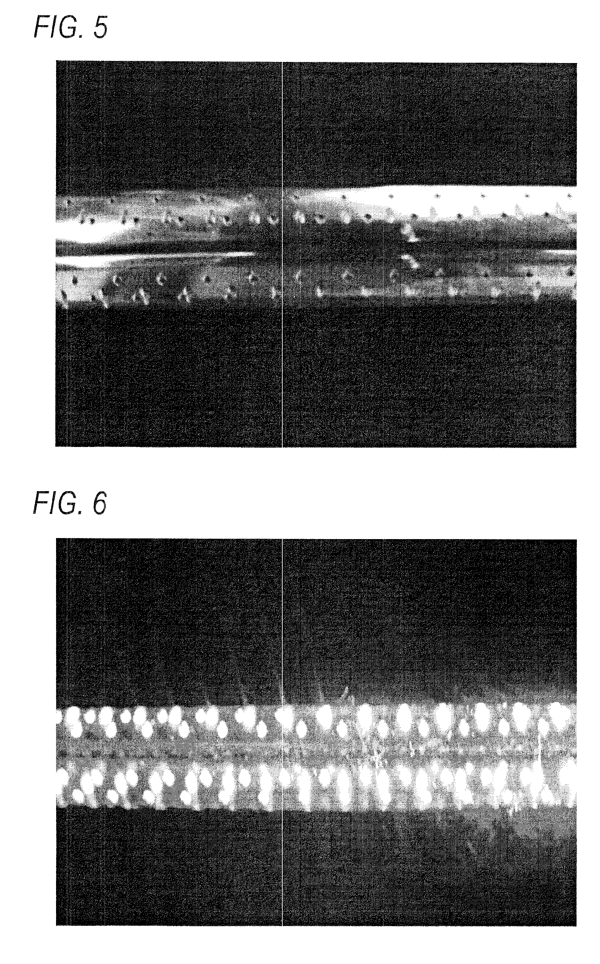

Fig. 5 is a picture of the light guide member 20 taken from a front side when the LED light source 22 is in the off-state. As shown in Fig. 5, although the LED light source 22 is in the off-state and further the rear surface 20C is not subjected to the mirror-like finishing, the light guide member 20 reflects the light from the outside and glitters. Accordingly, it is possible to give a user a look of the light guide member 20 as if the light guide member 20 was plated, so that the high decorative effect can be obtained also when the LED light source 22 is in the off-state.

Fig. 6 is a picture of the light guide member 20 taken from the front side when the LED light source 22 is in the On-state. As shown in Fig. 6, when the LED light source 22 is lighting, it is possible to make the reflection images by the plural punctures 20d appear in three-dimensional relief inside the light guide member 20. Therefore, also when the LED light source 22 is lighting, the high decorative effect can be obtained.

Although the invention has been described with respect to the foregoing embodiments, those skilled in the art, having benefit of this disclosure, will appreciate that other embodiments can be devised which do not depart from the scope of the invention as disclosed herein. Accordingly, other implementations are within the scope of the claims.

While the invention has been described with respect to a limited number of embodiments, those skilled in the art, having benefit of this disclosure, will appreciate that other embodiments can be devised which do not depart from the scope of the invention as disclosed herein. Accordingly, the scope of the invention should be limited only by the attached claims.

## Claims

1. A light guide member comprising:
a main body (20) formed of material having translucency,
wherein the main body (20) extends from a first end (20a) to a second end (20a) in an extending direction,
wherein the first end (20a) is configured to have light from a light source (22) enter,
**characterized in that** a vertical cross-section of the main body (20) in a plane (P-P) perpendicular to the extending direction is formed in a shape of a fan.

2. The light guide member according to Claim 1, wherein the main body (20) is formed so that two straight-line portions (20c) in the fan-shaped cross-section cross each other at substantially right angles (20e).

3. The light guide member according to Claim 1 or 2, wherein plural recess portions (20d) are provided scatteringly in at least one of two surfaces that form two straight-line portions (20c) of the fan-shaped cross-section.

4. The light guide member according to Claim 3, wherein the plural recess portions (20d) are provided in both of the two surfaces (20c) so as to be located asymmetrically around a line of intersection (20e) between the two surfaces (20c).

5. A vehicle door comprising a light guide member according to any one of Claims I to 4.
